**Europäisches Patentamt**

(19) **European Patent Office**

**Office européen des brevets**

(11) Numéro de publication: **0 115 353**
**B1**

(12) **FASCICULE DE BREVET EUROPEEN**

(45) Date de publication du fascicule du brevet:
16.09.87

(51) Int. Cl.⁴: **B 23 Q 7/04,** B 23 Q 16/00

(21) Numéro de dépôt: **84100952.5**

(22) Date de dépôt: **31.01.84**

(54) **Dispositif destiné à déplacer, devant des moyens d'usinage et dans le sens de sa longueur un profilé à usiner.**

(30) Priorité: **01.02.83 FR 8301567**

(43) Date de publication de la demande:
**08.08.84 Bulletin 84/32**

(45) Mention de la délivrance du brevet:
**16.09.87 Bulletin 87/38**

(84) Etats contractants désignés:
**AT BE CH DE GB IT LI LU NL SE**

(56) Documents cités:
**DE - B - 1 131 487**
**FR - A - 1 302 657**
**FR - A - 2 168 291**
**FR - A - 2 230 567**
**US - A - 3 094 224**

(73) Titulaire: **R. DUFIEUX: Société Anonyme dite, 4, rue Monmousseau, F-38130 Echirolles (FR)**
Titulaire: **SOCIETE NATIONALE DES CHEMINS DE FER FRANCAIS, 88, rue Saint-Lazare, F-75436 Paris Cedex 09 (FR)**

(72) Inventeur: **Genans, Michel, 12, rue Barnal de Montferrat, F-38000 Grenoble (FR)**

(74) Mandataire: **Casalonga, Alain et al, BUREAU D.A. CASALONGA OFFICE JOSSE & PETIT Morassistrasse 8, D-8000 München 5 (DE)**

ACTORUM AG

# Description

La présente invention concerne un dispositif destiné à déplacer, devant des moyens d'usinage et dans le sens de sa longueur, un profilé à usiner.

Actuellement, pour déplacer un profilé à usiner devant des moyens d'usinage en vue d'effectuer par exemple des perçages prévus en différents endroits le long du profilé, on utilise des rouleaux qui portent le profilé à usiner et qui sont entraînés en rotation. En outre, pour disposer le profilé à usiner par rapport aux moyens d'usinage, on utilise des butées réglables dans la direction de déplacement du profilé à usiner contre lesquelles on vient mettre en butée l'extrémité du profilé à usiner. Cet état de la technique présente cependant de nombreux inconvénients. Tout d'abord, il apparaît qu'on est obligé de prévoir d'une part des moyens pour déplacer le profilé et d'autre part des moyens pour régler la position du profilé par rapport aux moyens d'usinage. Les réglages successifs des butées ne permettent pas de positionner correctement et pour chaque usinage le profilé à usiner. En outre, l'amenée de l'extrémité du profilé en contact avec la butée préréglée grâce aux rouleaux d'entraînement occasionne des chocs et des imprécisions.

On connaît également, par le brevet US 3 094 224, un dispositif pour déplacer un profilé qui comprend une pince pour saisir le profilé et une butée pour l'extrémité du profilé, cette pince et cette butée étant solidaires. Cependant, dans ce dispositif connu, la longueur maximum de déplacement possible du profilé à l'aide de la pince est limitée à la longueur de déplacement possible de la pince et de la butée.

La présente invention a notamment pour but de remédier à ces inconvénients et propose un dispositif permettant, de manière simple, de déplacer un profilé à usiner devant des moyens d'usinage et de positionner ce dernier par rapport à ces moyens d'usinage avec précision même si des usinages sont à effectuer en différents endroits le long du profilé à usiner.

Le dispositif selon la présente invention, destiné à déplacer devant des moyens d'usinage et dans le sens de sa longueur un profilé à usiner, en vue de son positionnement par rapport aux moyens d'usinage, est tel qu'il comprend une pince adaptée pour saisir ledit profilé transversalement, des moyens pour actionner ladite pince pour que cette dernière saisisse ou libère ledit profilé, une butée pour l'extrémité du profilé et des moyens de translation pour déplacer simultanément ladite pince et ladite butée dans le sens de la longueur du profilé.

Selon la présente invention, ce dispositif comprend en outre des moyens pour déplacer ladite butée entre une première position dans laquelle elle se trouve sur le chemin du profilé et une seconde position dans laquelle elle est escamotée de telle sorte que, lorsque ladite butée est dans sa première position, l'extrémité avant dudit profilé peut être amenée en contact avec cette butée et s'étendre entre les branches de ladite pince de manière à pouvoir être saisie et que, lorsque ladite butée est à sa deuxième position, ladite pince peut saisir ledit profilé en un endroit quelconque de sa longueur.

Selon la présente invention, lesdits moyens de translation peuvent avantageusement comprendre un chariot portant ladite pince et ladite butée et monté mobile le long de moyens de guidage s'étendant parallèlement à la direction de déplacement dudit profilé et des moyens pour déplacer ledit chariot le long desdits moyens de guidage.

Selon la présente invention, et dans une variante de réalisation, ladite butée peut être montée sur une glissière de manière à pouvoir être déplacée transversalement à la direction de déplacement dudit profilé.

La présente invention sera mieux comprise à l'étude d'une unité d'usinage de profilés munie d'un dispositif permettant de déplacer les profilés à usiner, décrite à titre d'exemple non limitatif et illustrée schématiquement sur le dessin sur lequel:

la figure 1 représente une coupe transversale de l'unité d'usinage;

la figure 2 représente une vue de côté partiellement en coupe de l'unité d'usinage représentée sur la figure 1;

et la figure 3 représente une vue de dessus partielle, partiellement en coupe, de l'unité d'usinage représentée sur la figure 1.

L'unité d'usinage représentée sur les figures et repérée d'une manière générale par la référence 1 est destinée à effectuer des perçages latéraux et par le dessous dans des profilés 2 formés dans l'exemple, par des rails 2.

L'unité d'usinage 1 comprend un châssis repéré d'une manière générale par la référence 3. Ce châssis porte un ensemble de rouleaux transversaux 4 à axes parallèles qui sont montés libres en rotation et sur lesquels le profilé 2 peut se déplacer horizontalement dans le sens de sa longueur.

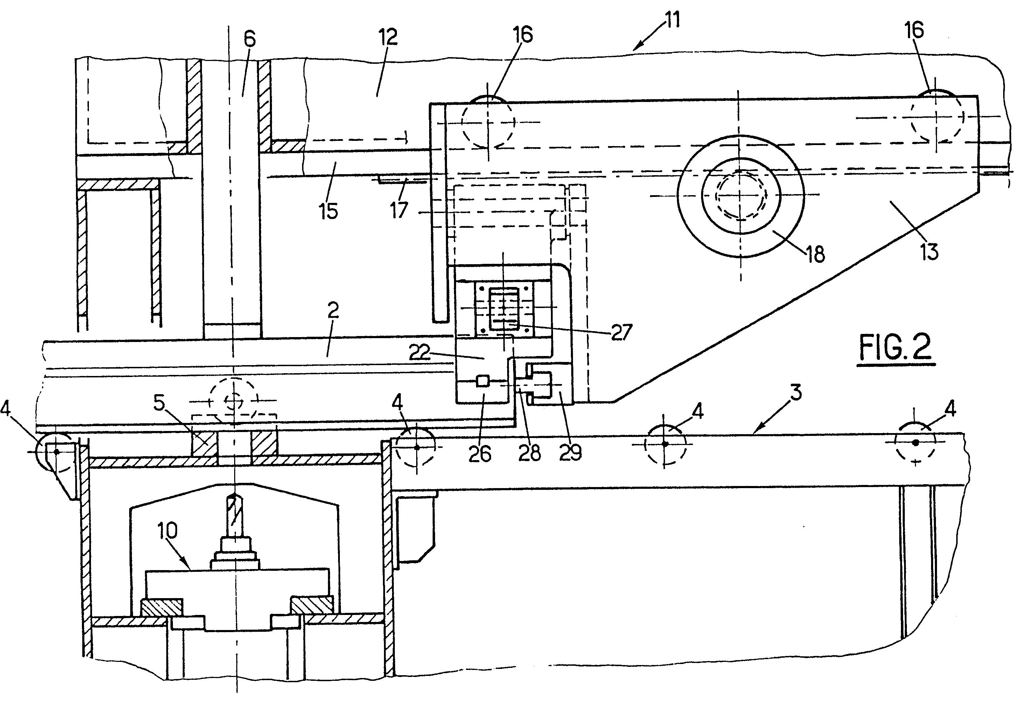

Dans une zone du chemin déterminé par les rouleaux 4, entre deux rouleaux, l'unité d'usinage 1 présente une table 5 sur laquelle le profilé 2 peut être appliqué grâce à un vérin 6 visible partiellement sur la figure 2. Cette table 5 présente, vers le haut, une butée latérale 7 contre laquelle l'un des bords latéraux de l'aîle inférieure du profilé 2 peut être appliqué grâce à deux vérins 8 qui agit transversalement sur l'autre bord latéral de l'aîle inférieure du profilé 2. De cette manière, le profilé 2 peut être convenablement maintenue, dans la zone de la table 5, en vue d'effectuer des usinages dans cette zone.

Dans la zone de la table 5, l'unité d'usinage 1 présente un ensemble de perçage repéré d'une manière générale par la référence 9 destinée à effectuer des perçages transversalement et latéralement au profilé 2, par exemple dans son âme, ainsi qu'un ensemble de perçage repéré d'une manière générale par la référence 10 et destiné à effectuer des perçages par le dessous et au travers de la table 5 dans le profilé 2. Les ensembles de perçage 9 et 10 sont portés par le châssis 3 et sont par ailleurs bien connus en soi. Ils ne nécessitent donc pas de description plus détaillée.

En vue de déplacer par traction le profilé 2 dans le sens de la longueur sur les rouleaux 4 et devant les ensembles de perçage 9 et 10, l'unité d'usinage 2 comprend un dispositif d'entraînement et de positionnement repéré d'une manière générale par la référence 11.

Ce dispositif 11 comprend une poutre horizontale 12, portée par le châssis 3, qui s'étend parallèlement au sens du déplacement du profilé 2, du côté avant de la zone d'usinage de ce profilé et à distance au-dessus du chemin de rouleaux 4, et qui porte un chariot 13 mobile le long de cette poutre et au-dessous de cette dernière. A cet effet, la poutre 12 porte, à sa partie inférieure et de part et d'autre, deux glissières latérales 14 et 15 et le chariot 13 est monté sur ces glissières 14 et 15 grâce à une série de galets 16.

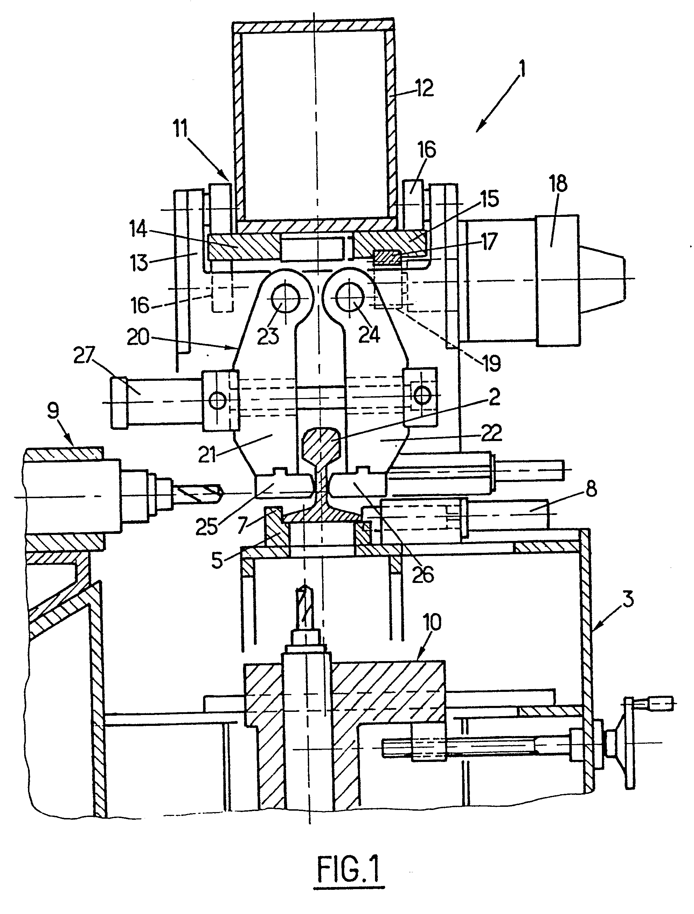

En vue de déplacer le chariot 13 le long de la poutre 12, on voit, notamment sur la figure 1, qu'on a prévu une crémaillère 17 fixée longitudinalement sur la glissière 15 et un motoréducteur 18 porté par le chariot 13 et dont l'arbre de sortie porte un pignon 19 en prise avec la crémaillère 17.

Comme on le voit bien sur la figure 1, le chariot 13 porte, en dessous, une pince repérée d'une manière générale par la référence 20. Cette pince 20 comprend deux branches 21 et 22 qui s'étendent vers le bas et dont les extrémités supérieures sont respectivement articulées autour d'axes 23 et 24 s'étendant dans le sens de déplacement du chariot 13 et les extrémités inférieures présentent respectivement des éléments 25 et 26 qui sont en saillie l'un vers l'autre. En vue d'écarter ou de rapprocher les extrémités inférieures 25 et 26 des branches 21 et 22 de la pince 20, ces branches sont reliées par un vérin 27, ce vérin permettant de déplacer les branches 21 et 22 de la pince 20 transversalement à la direction de déplacement du profilé 2.

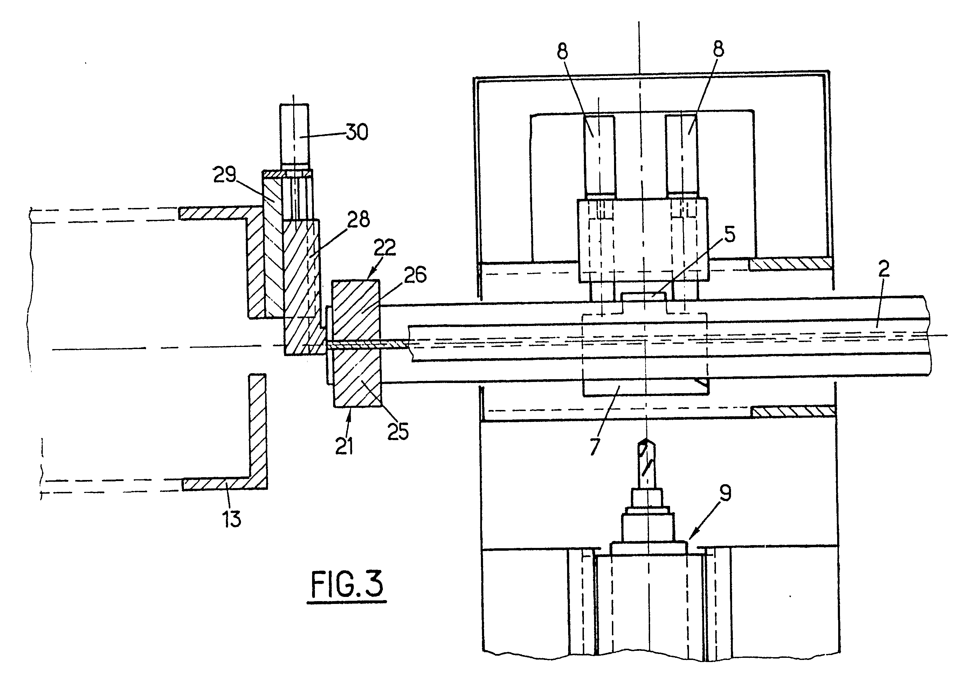

Comme on peut le voir sur les figures 2 et 3, le chariot 13 porte également une butée 28 placée en avant de la pince 20, montée sur une glissière 29 portée par le chariot 13 de manière à pouvoir être déplacée transversalement à la direction de déplacement du profilé 2 grâce à un vérin 30. Dans une première position, la butée 28 se trouve dans la direction de déplacement du profilé 2, en avant du passage séparant les branches 21 et 22 de la pince 20, tandis que dans une deuxième position, elle est escamotée et écartée vers l'extérieur.

Le dispositif 11 de l'unité d'usinage 1 peut être utilisé de la manière suivante, le profilé 2 étant déjà disposé sur la partie du chemin de rouleaux 4 située sur le côté opposé au chariot 13 par rapport à la table 5 et aux moyens d'usinage 9 et 10 et son extrémité avant s'étendant au-dessus de la table 5.

Après avoir écarté les extrémités 25 et 26 des branches 21 et 22 de la pince 20 grâce au vérin 27 et placé la butée 28 à sa première position grâce au vérin 30, on déplace dans le sens de sa longueur le profilé 2 pour que l'extrémité avant de ce dernier s'étende entre les extrémités inférieures 25 et 26 des branches 21 et 22 de la pince 20 et jusqu'à ce qu'elle vienne en contact avec la butée 28 portée par le chariot 13, ce dernier ayant été préalablement disposé dans une position rapprochée de la zone d'usinage.

Grâce au vérin 27, on rapproche les branches 21 et 22 de la pince 20 de telle sorte que leurs extrémités inférieures 26 et 27 viennent en contact avec les faces opposées de l'âme du profilé 2, de manière à saisir ce dernier par pincement.

En déplaçant le chariot 13 grâce au moteur 18, on peut alors déplacer le profilé 2 dans le sens de sa longueur devant les ensembles d'usinages 9 et 10. Comme la position du chariot 13 qui porte la butée 28 par rapport aux ensembles d'usinage 9 et 10 peut être déterminée par tout moyen connu, on peut disposer le profilé 2 dans des positions différentes déterminées afin d'exécuter des perçages grâce aux ensembles d'usinage 9 et 10 situés à des distances déterminées par rapport à l'extrémité du profilé 2 qui est en appui contre la butée 28.

Si le profilé 2 est très long, lorsque le chariot 13 arrive vers l'extrémité de la poutre 12 éloignée de la zone d'usinage, on écarte grâce au vérin 27 les branches 21 et 22 de la pince 20, on escamote vers l'extérieur la butée 28 grâce au vérin 30 de telle sorte que le profilé 2 n'est plus relié au chariot 13.

Grâce au moteur 18, on peut alors déplacer le chariot 13 jusqu'à le disposer de nouveau dans une position rapprochée de la zone d'usinage et saisir de nouveau le profilé 2, par pincement, en rapprochant les branches 21 et 22 de la pince 20 en actionnant le vérin 27.

A partir de cette nouvelle position du chariot 13 par rapport au profilé 2, on peut de nouveau faire avancer le profilé 2 en actionnant le moteur 18 en vue d'effectuer des usinages dans des endroits plus éloignés de l'extrémité avant du profilé 2. Comme le profilé 2 n'a pas changé de position lors du déplacement libre du chariot 13, on peut convenablement positionner le profilé 2 par rapport aux ensembles d'usinage 9 et 10 compte tenu du fait que la nouvelle position du chariot 10 par rapport à l'extrémité avant du profilé 2 est déterminable.

Cette opération de reprise du profilé 2 par déplacement du chariot 13 peut être répétée de telle sorte que le profilé peut avoir une longueur quelconque même si la poutre 12 a une longueur limitée.

La présente invention ne se limite pas à l'exemple ci-dessus décrit. Bien de variantes de réalisation et d'utilisation sont possibles sans sortir du cadre de la présente invention défini par les revendications annexées.

**Revendications**

1. Dispositif destiné à déplacer, devant des moyens d'usinage (9, 10) et dans le sens de sa longueur, un profilé (2) à usiner, en vue de son positionnement par rapport aux moyens d'usinage, comprenant une pince (20) adaptée pour saisir ledit profilé transversalement, des moyens pour actionner ladite pince pour que cette dernière saisisse ou libère ledit profilé, une butée (28) pour l'extrémité du profilé et des moyens de translation (11) pour déplacer simultanément ladite pince et ladite butée dans le sens de la longueur du profilé, caractérisé par le fait qu'il comprend en outre des moyens pour déplacer ladite butée entre une première position dans laquelle elle se trouve sur le chemin du profilé et une seconde position dans laquelle elle est escamotée de telle sorte que, lorsque ladite butée (28) est dans sa première position, l'extrémité avant dudit profilé (2) peut être amenée en contact avec cette butée et s'étendre entre les branches de ladite pince (20) de manière à pouvoir être saisie et que, lorsque ladite butée est à sa deuxième position, ladite pince peut saisir ledit profilé en un endroit quelconque de sa longueur.

2. Dispositif selon la revendication 1, caractérisé par le fait que lesdits moyens de translation (11) comprennent un chariot (13) portant ladite pince (20) et ladite butée (28) et monté mobile le long de moyens de guidage s'étendant parallèlement à la direction de déplacement dudit profilé et des moyens pour déplacer ledit chariot le long desdits moyens de guidage.

3. Dispositif selon l'une des revendications 1 et 2, caractérisé par le fait que ladite butée (28) est montée sur un glissement (29) de manière à pouvoir être déplacée transversalement à la direction de déplacement dudit profilé.

## Patentansprüche

1. Vorrichtung zum Verschieben eines zu bearbeitenden Profils (2) vor die Bearbeitungsmittel (9, 10) und in Profillängsrichtung, im Hinblick auf seine Position zu den Bearbeitungsmittel, umfassend eine Klemmvorrichtung (20), so eingestellt, dass sie genanntes Profil in Querrichtung erfasst, eine Vorrichtung zur Betätigung genannter Klemmvorrichtung, so dass diese genanntes Profil erfasst oder freigibt, einen Anschlag (28) für das Ende des Profils und einen Fördermechanismus (11), um gleichzeitig genannte Klemmvorrichtung und genannten Anschlag in Längsrichtung des Profils zu verschieben, dadurch gekennzeichnet, dass sie darüberhinaus Mittel umfasst, zum Verschieben genannten Anschlags zwischen einer ersten Position, in der er sich auf dem Profilweg befindet und einer zweiten Position, in der er so eingezogen wird, dass wenn sich genannter Anschlag (28) in seiner ersten Position befindet, das vordere Ende des genannten Profils (2) mit diesem Anschlag in Kontakt gebracht werden und sich so zwischen die Arme der genannten Klemmvorrichtung (20) erstrecken kann, dass es erfasst werden kann und dass, wenn genannter Anschlag sich in seiner zweiten Position befindet, genannte Klemmvorrichtung genanntes Profil an irgendeiner Stelle seiner Längsrichtung erfassen kann.

2. Vorrichtung nach Anspruch 1, dadurch gekennzeichnet, dass genannter Fördermechanismus (11) einen Karren (13) umfasst, der genannte Klemmvorrichtung (20) und genannten Anschlag (28) trägt und der beweglich längs von Lenkmitteln montiert ist, die sich parallel zur Verschieberichtung genannten Profils erstrecken, sowie Mittel zum Verschieben genannten Karrens längs Lenkmittel.

3. Vorrichtung nach einem der Ansprüche 1 und 2, dadurch gekennzeichnet, dass genannter Anschlag (28) so auf einen Schieber montiert ist, dass er quer zu der Verschieberichtung genannten Profils verschoben werden kann.

## Claims

1. Device intended to displace, in front of machining means (9, 10) and in the direction of its length, a profiled part (2) to be machined, with a view to its positioning in relation to the machining means, comprising a gripper (20) adapted to grip the said profiled part transversely, means for actuating the said gripper in order that the latter should grip or release the said profiled part, an abutment (28) for the end of the profiled part and translation means (11) to displace the said gripper and the said abutment simultaneously in the direction of the length of the profiled part, characterized in that it further comprises means for displacing the said abutment between a first position, in which it is situated on the path of the profiled part, and a second position, in which it is retracted in such a manner that, when the said abutment (28) is in its first position, the front end of the said profiled part (2) may be brought into contact with this abutment and extend between the arms of the said gripper (20) in such a manner that it can be gripped and that, when the said abutment is in its second position, the said gripper can grip the said profiled part at any position along its length.

2. Device according to Claim 1, characterized in that the said translation means (11) comprise a carriage (13) carrying the said gripper (20) and the said abutment (28) and mounted to be movable along guide means extending parallel to the direction of displacement of the said profiled part and means for displacing the said carriage along the said guide means.

3. Device according to one of Claims 1 and 2, characterized in that the said abutment (28) is mounted on a slide (29) in such a manner as to be able to be displaced transversely to the direction of displacement of the said profiled part.

FIG.1

FIG.2

0 115 353

FIG.3